# EUROPEAN PATENT SPECIFICATION

(11) **EP 3 945 230 B1**
(45) Date of publication and mention of the grant of the patent: **26.03.2025**
(21) Application number: 21189215.3
(22) Date of filing: 02.08.2021
(51) Int. Cl.: F16K 11/044, F16K 11/078, F16K 31/524

(54) **MULTIFUNCTIONAL CONTROL VALVE AND SHOWER THEREWITH**
MULTIFUNKTIONALES STEUERUNGSVENTIL UND DUSCHE DAMIT
SOUPAPE DE COMMANDE MULTIFONCTION ET DOUCHE COMPRENANT LADITE SOUPAPE

(30) Priority: 31.07.2020 CN 202010761782
(43) Date of publication of application: 02.02.2022
(73) Proprietor: Xiamen Solex High-Tech Industries Co., Ltd., Xiamen, Fujian 361028 (CN)
(72) Inventor: LIN, Fangqi, Xiamen, 361028 (CN); CHEN, Wenxing, Xiamen, 361028 (CN); HU, Lihong, Xiamen, 361028 (CN)
(74) Representative: Verscht, Thomas Kurt Albert

(56) References cited:
- EP-A2- 1 281 899
- US-A- 5 608 928
- US-A- 5 896 601

## Description

### FIELD OF THE DISCLOSURE

The present disclosure relates to sanitary wares, in particular relates to a multifunctional control valve and a shower.

### BACKGROUND OF THE DISCLOSURE

The existing multifunctional control valve comprises a housing, a temperature adjusting knob, a switch assembly and a center pin. The housing comprises a body and a water passage. The temperature adjusting knob is movably connected to the body, and the water passage comprises a hot water inlet and a cold water inlet, and a mixed water passage is defined in the water passage; the center pin is disposed in the housing, a reset spring is disposed between the center pin and the body, the center pin is disposed with an adjusting wall corresponding to the hot water inlet, the adjusting wall is used to control inflow of water from the hot water inlet; the center pin comprises a joint, a disk and a piston portion, and the switch assembly drives the central pin to axially move due to the joint, and the temperature adjustment knob is connected to the disk to drive the central pin to rotate. The multifunctional control valve only integrates two functions of temperature adjustment and water outflow, while waterway switching function cannot be achieved. Therefore, further improvement is needed. A conventional multifunctional control valve according to the preamble of claim 1 is known from EP1281899A2.

### BRIEF SUMMARY OF THE DISCLOSURE

The present disclosure provides a multifunctional control valve and a shower to solve the deficiencies of the multifunctional control valve in the background.

In order to solve the technical problems, a first solution of the present disclosure is as follows. Multifunctional control valve, which comprises:
A valve body, wherein the valve body comprises two water inflowing passages, a mixed water passage and two water dividing passages;
A main control valve core, wherein the main control valve core is disposed in the valve body and cooperates with the two water inflowing passages and the mixed water passage to enable the main control valve core to control a water temperature, an on-off operation and a flow rate of the mixed water passage, and an end surface of the main control valve core is concave to define a sliding groove;
A switch mechanism, wherein the switch mechanism is disposed in the valve body and cooperates with the mixed water passage and the two water dividing passages to enable the switch mechanism to switch the two water dividing passages to be in communication with the mixed water passage; and
A switch driving mechanism, wherein the switch driving mechanism comprises a sliding rod, the sliding rod is slidably connected to the sliding groove, and the sliding rod is operatively connected to the switch mechanism to drive the switch mechanism to achieve the switching.

In an embodiment, the valve body comprises a fixed piece, the fixed piece comprises two first through holes, and the two water inflowing passages respectively comprise one of the two first through holes; the main control valve core comprises a moving piece and a main control driving mechanism; an end surface of the moving piece is concave to define a mixed water groove, and the mixed water passage comprises the mixed water groove; the end surface of the moving piece hermetically abuts an end surface of the fixed piece, and a groove opening of the mixed water groove cooperates with the two first through holes; the main control driving mechanism is operatively connected to the moving piece to drive the moving piece to slide and rotate; the moving piece slides to control the on-off operation and the flow rate of the mixed water passage, and the moving piece rotates to control the water temperature of the mixed water passage.

In an embodiment, the main control driving mechanism comprises a rotating base and a swinging rod, the rotating base is rotatably connected to an inner side of the valve body, and a middle portion of the swinging rod is pivotally connected to the rotating base, an inner end of the swinging rod is operatively connected to the moving piece, and the swinging rod swings to drive the moving piece to slide, and the swinging rod rotates to drive the rotating base and the moving piece to rotate; the rotating base comprises the sliding groove.

In an embodiment, an outer end of the swinging rod extends out of the rotating base.

In an embodiment, the main control driving mechanism further comprises a connector base, the connector base and the moving piece are connected together to move synchronously; an end surface of the connector base is concave to define an insert groove, an inner end of the swinging rod is disposed in the insert groove, so that the swinging rod swings to drive the connector base and the moving piece to slide together and the swinging rod rotates to drive the rotating base, the connector base and the moving piece to rotate together.

In an embodiment, the main control driving mechanism further comprises an interlocking base and a handle rod, an outer end of the swinging rod extends out of the rotating base, the interlocking base comprises a matching groove, the outer end of the swinging rod cooperates with and is disposed in the matching groove, and the handle rod is fixedly connected to the interlocking base.

In an embodiment, the switch mechanism comprises a switch shaft, the switch shaft is slidably connected to an inner side of the valve body, and the switch shaft slides to control the two water dividing passages to be switched to be in communication with the mixed water passage; the switch driving mechanism comprises an automatic ballpoint pen mechanism, the sliding rod defines a pressing rod of the automatic ballpoint pen mechanism, and the switch shaft defines a ballpoint refill of the automatic ballpoint pen mechanism.

In an embodiment, the valve body comprises a fixed piece, the main control valve core comprises a moving piece and a main control driving mechanism, an end surface of the moving piece is concave to define a mixed water groove, and the mixed water passage comprises the mixed water groove; the end surface of the moving piece hermetically abuts an end surface of the fixed piece, the main control driving mechanism is operatively connected to the moving piece to drive the moving piece to slide and rotate, the moving piece slides to control the on-off operation and the flow rate of the mixed water passage, and the moving piece rotates to control the water temperature of the mixed water passage; the valve body comprises a base member, the base member comprises two second through holes and the two water dividing passages, and the two water inflowing passages respectively comprise one of the two second through holes; the base member cooperates with the fixed piece and comprises a control groove in communication with the mixed water groove, and the switch shaft is at least partially disposed in the control groove.

In an embodiment, a bottom surface of the switch shaft is concave to define a water groove, the switch shaft comprises a water hole penetrating an inner side and an outer side of the water groove, and the water hole is in communication with the water groove and the control groove and/or the water groove and the mixed water groove; the water groove is in communication with one of the two water dividing passages, the control groove is in communication with another one of the two water dividing passages, a first sealing ring is fixedly disposed on an outer side of the switch shaft, the first sealing ring cooperates with the base member, so that the switch shaft slides to control an on-off operation of the control groove to achieve the switching for the two water dividing passages due to the first sealing ring.

In an embodiment, the two water dividing passages comprises a first water dividing passage and a second water dividing passage; the first water dividing passage is disposed with a sealing piston configured to slide relative to the first water dividing passage and a water-closing spring configured to abut the sealing piston, the first water dividing passage is divided into a front water passage and a rear water passage due to the sealing piston, and the water groove is in communication with the rear water passage; the control groove comprises a control port, the first sealing ring cooperates with the control port to control the on-off operation of the control groove due to the first sealing ring , and the control port is in communication with the second water dividing passage and the front water passage.

In an embodiment, the base member comprises a bottom base, a middle base and a fixed base hermetically and fixedly connected together in sequence; the fixed base comprises the control port, the middle base comprises a middle through groove and two first side through grooves, the bottom base comprises two second side through grooves and a lower groove extending inward from a top surface; the two water dividing passages respectively comprises one of the two first side through grooves and one of the two second side through grooves that are in communication; the sealing piston is slidably connected to one of the two first side through grooves, the water-closing spring is disposed in the one of the two first side through grooves and abuts the sealing piston and the fixed base; a gap is defined between the middle through groove and the fixed base, the gap is in communication with upper ends of the two first side through grooves; the middle through groove is in communication with the lower groove, the switch shaft is hermetically connected to the middle through groove due to a second sealing ring, and the control groove is in communication with a lower end of the one of the two first side through grooves; the control groove comprises the control port, the middle through groove and the lower groove.

In an embodiment, a clearance in communication with the rear water passage is defined between the lower groove and the middle through groove.

In an embodiment,a middle portion of the fixed piece comprises a third through hole, and the control groove further comprises the third through hole.

In an embodiment, the switch driving mechanism further comprises a button, the button abuts and is connected to the sliding rod, and an elastic body abuts the switch shaft.

In order to solve the technical problems, a second solution of the present disclosure is as follows.

A shower, which comprises the multifunctional control valve.

In an embodiment, the shower further comprises a faucet body, two water inflowing joints and two water outflowing passages, the two water inflowing joints are disposed on a left side and a right side of a rear surface of the faucet body and are respectively in communication the two water inflowing passages, a middle of a front surface of the faucet body comprises a mounting groove, the multifunctional control valve is disposed in the mounting groove, and the two water outflowing passages are respectively in communication with the two water dividing passages.

Compared with the existing techniques, the technical solution has the following advantages.

The multifunctional control valve of the present disclosure integrates an on-off operation, flow rate adjustment, water temperature adjustment and waterway switching, the structure is compact , the assembly is convenient, and the operation is convenient.

The switch shaft slides to control the two water dividing passages to be switched to be in communication with the mixed water passage. The switch driving mechanism comprises the automatic ballpoint pen mechanism, the sliding rod defines the pressing rod of the automatic ballpoint pen mechanism, and the switch shaft defines the ballpoint refill of the automatic ballpoint pen mechanism. The operation is convenient and easy.

### BRIEF DESCRIPTION OF THE DRAWINGS

The present disclosure will be further described in combination with the accompanying drawings and embodiments.
Fig. 1 illustrates a perspective view of a shower of a specific embodiment.
Fig. 2 illustrates a perspective view of a multifunctional control valve of the specific embodiment.
Fig. 3 illustrates an exploded perspective view of the shower of the specific embodiment.
Fig. 4 illustrates a first cross-sectional view of the shower of the specific embodiment.
Fig. 5 illustrates a second cross-sectional view of the shower of the specific embodiment.
Fig. 6 illustrates an exploded perspective view of the multifunctional control valve in the specific embodiment.
Fig. 7 illustrates a first structural view of the multifunctional control valve of the specific embodiment when water is closed.
Fig. 8 illustrates a first cross-sectional view of the multifunctional control valve of the specific embodiment when the water is closed
Fig. 9 illustrates a second structural view of the multifunctional control valve of the specific embodiment when the water is open.
Fig. 10 illustrates a second cross-sectional view of the multifunctional control valve of the specific embodiment when the water is open.
Fig. 11 illustrates a third structural view of the multifunctional control valve of the specific embodiment when the water flows out of a first water dividing passage.
Fig. 12 illustrates a fourth structural view of the multifunctional control valve of the specific embodiment when the water flows out of a second water dividing passage.
Fig. 13 illustrates a structural view of a moving piece of the specific embodiment.
Fig. 14 illustrates a structural view of a fixed piece of the specific embodiment.
Fig. 15 illustrates a structural view of a cooperation between the moving piece and the fixed piece of the specific embodiment when the water is closed. A solid line represents the fixed piece, and a dashed line represents the moving piece in the figure.
Fig. 16 illustrates a structural view of the cooperation between the moving piece and the fixed piece of the specific embodiment when the water is open. A solid line represents the fixed piece, and a dashed line represents the moving piece in the figure.
Fig. 17 illustrates a structural view of the cooperation between the moving piece and the fixed piece in the specific embodiment when a temperature is being adjusted. A solid line represents the fixed piece, and a dashed line represents the moving piece in the figure.
Fig. 18 illustrates a structural view of the cooperation between the moving piece and the fixed piece in the specific embodiment when in a totally cold or hot state. A solid line represents the fixed piece, and a dashed line represents the moving piece in the figure.

References: valve body 1, main control valve core 2, switch mechanism 3, and switch driving mechanism 4;
Housing 11, fixed piece 12, first through hole 121, third through hole 122, base member 13, second through hole 131, bottom base 132, middle base 133, fixed base 134, gap 135, and clearance 136;
water inflowing passage, mixed water passage, water dividing passage, front water passage 1611, rear water passage 1612, sealing piston 163, water-closing spring 164, control groove 17, and control port 171;
Moving piece 21, main control driving mechanism 22, mixed water groove 211, rotating base 221, swinging rod 222, connector base 223, interlocking base 224, handle rod 225, and sliding groove 226;
Switch shaft 31, water groove 311, water hole 312, first sealing ring 313, and second sealing ring 314;
Sliding rod 41, button 42, and elastic body 43;
Faucet body 51, water inflowing joint 52, water outflowing passage 53, mounting groove 54, and fixed sleeve 55.

### DETAILED DESCRIPTION OF THE EMBODIMENTS

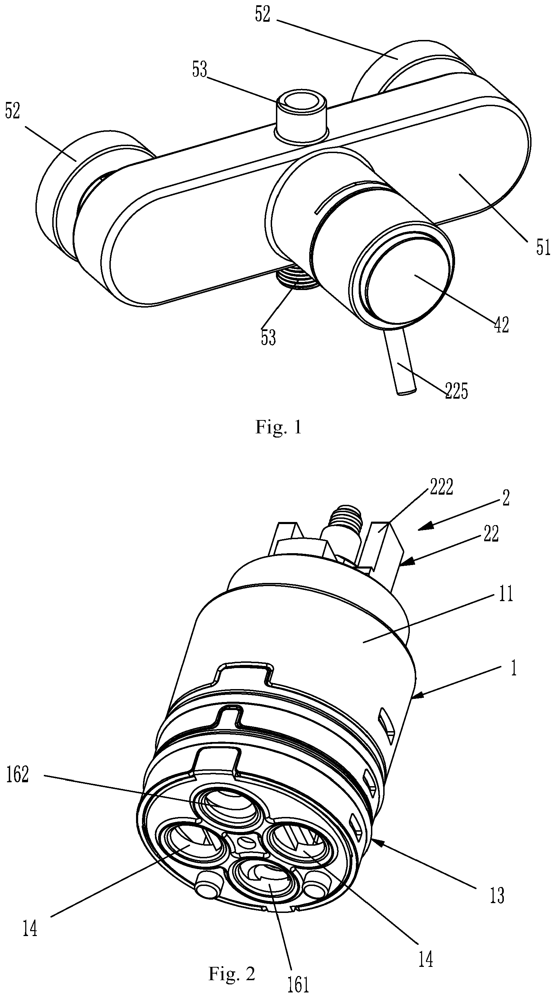

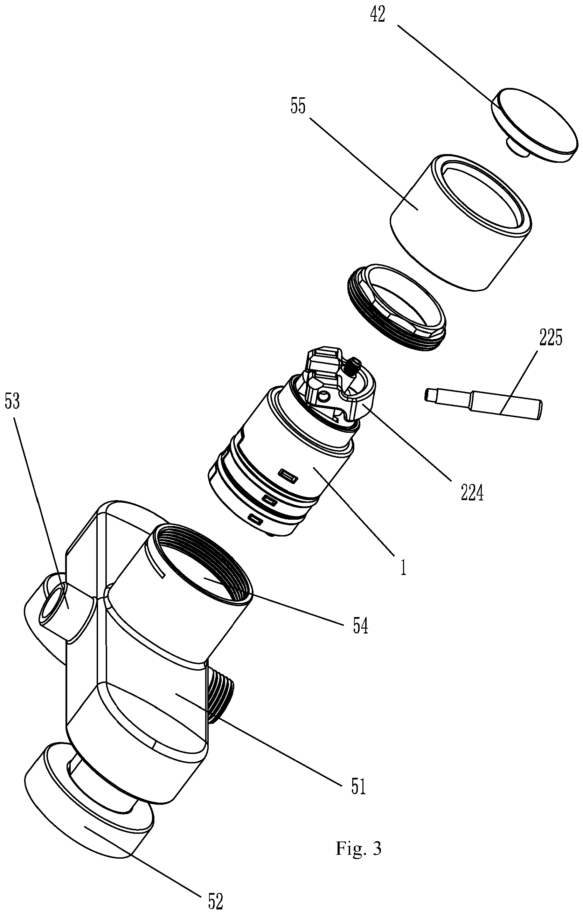

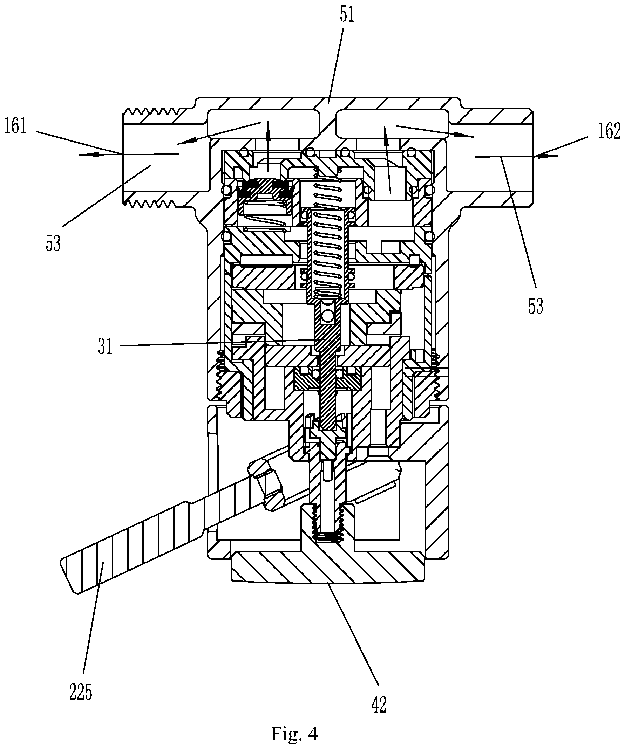

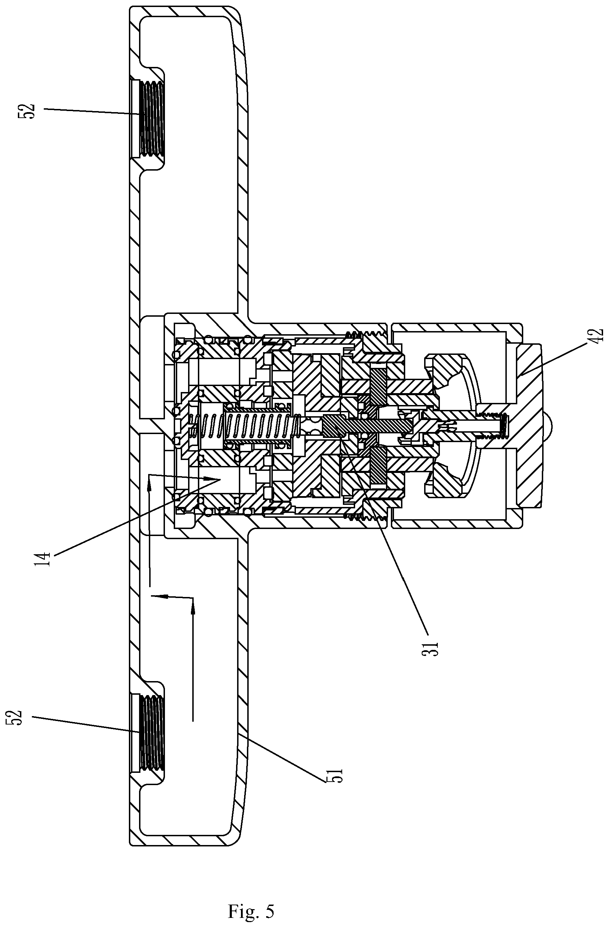

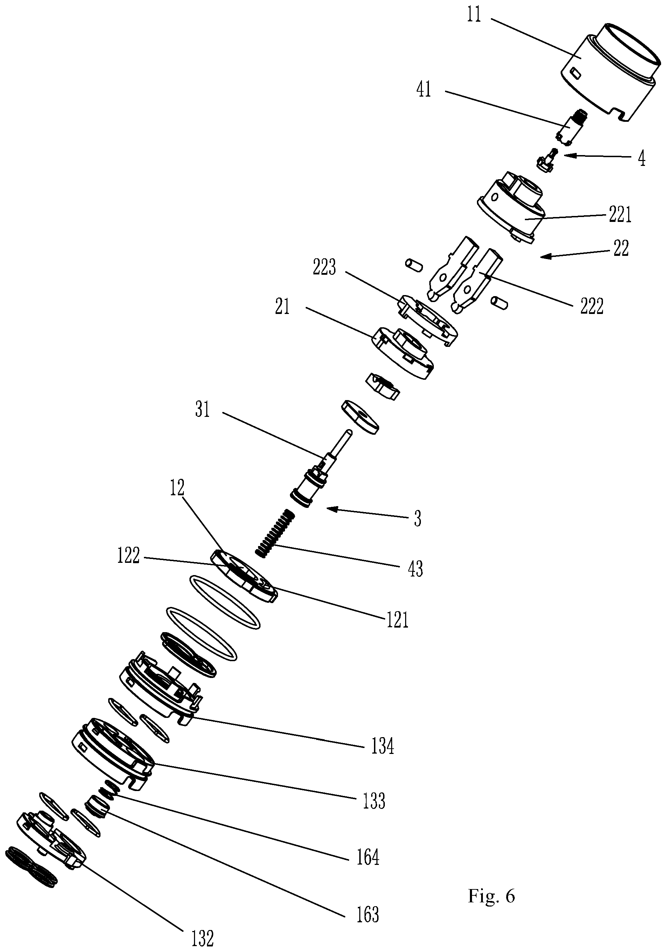

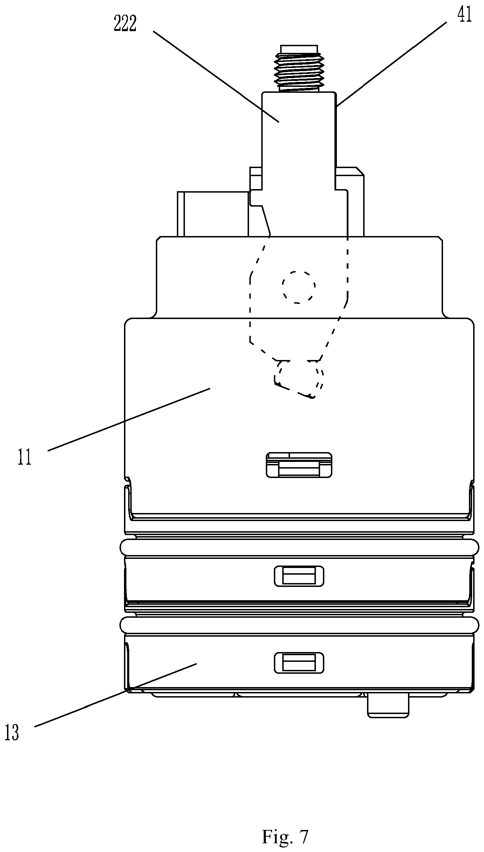

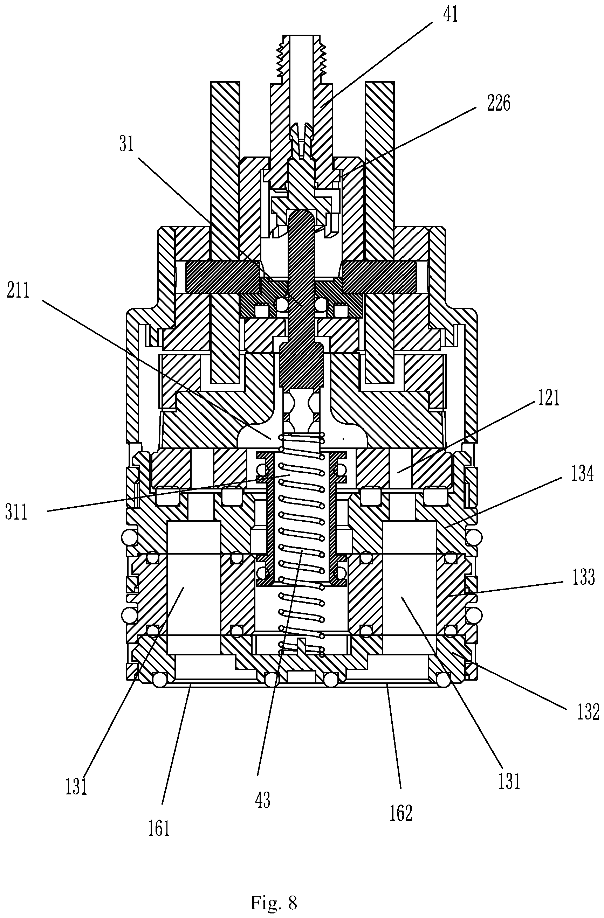

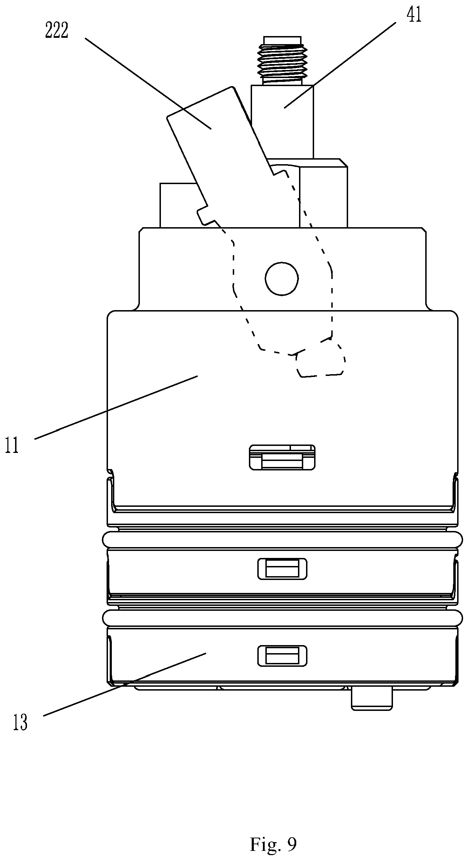

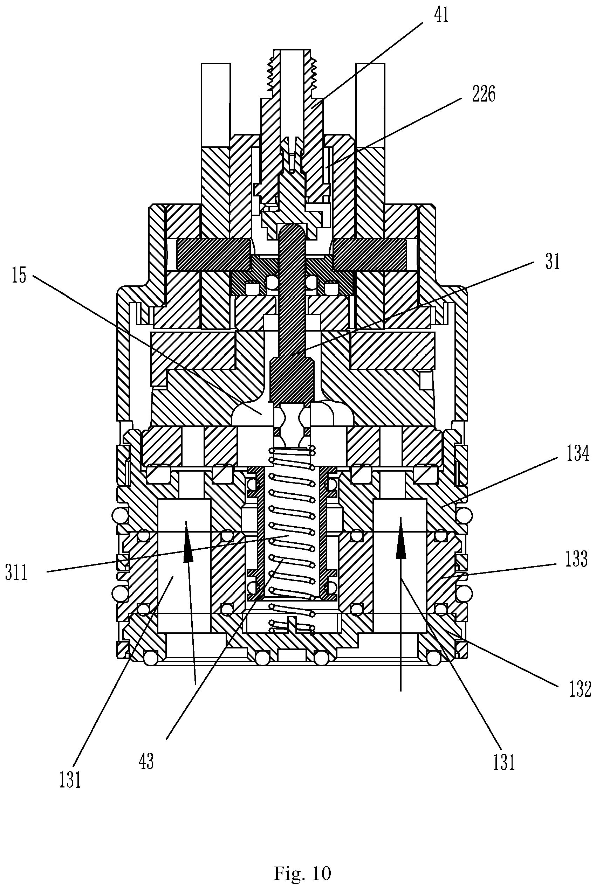

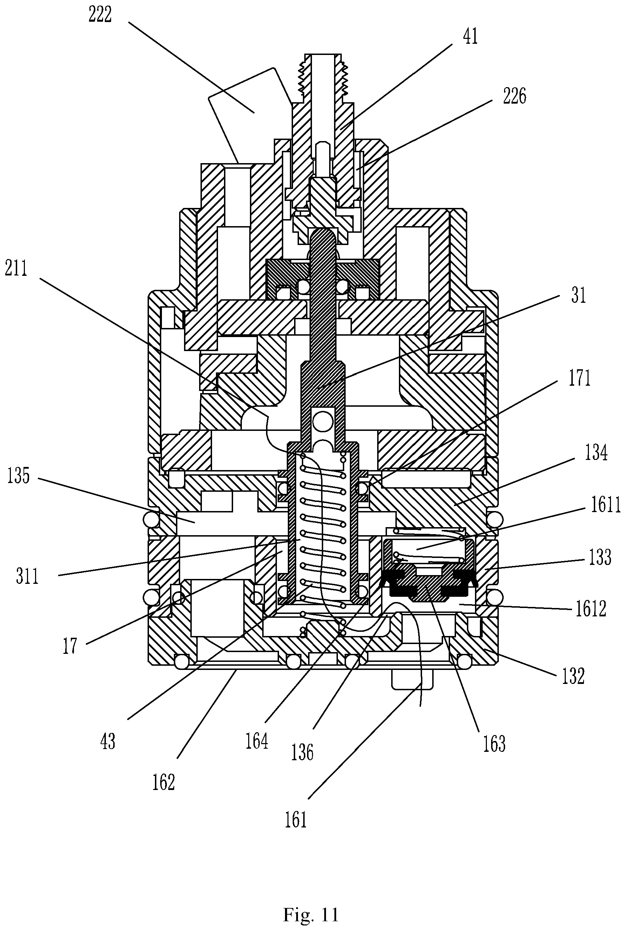

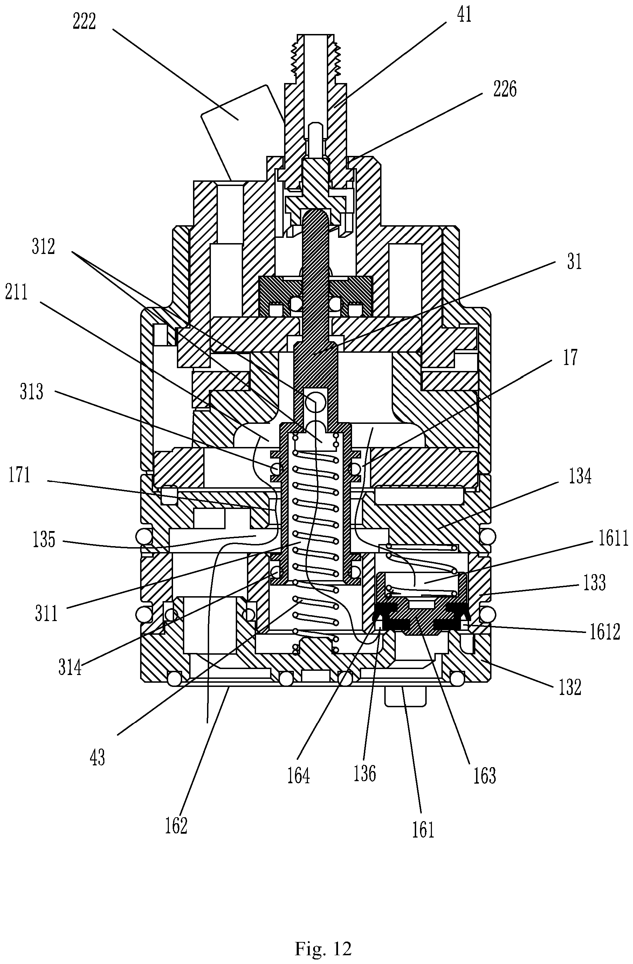

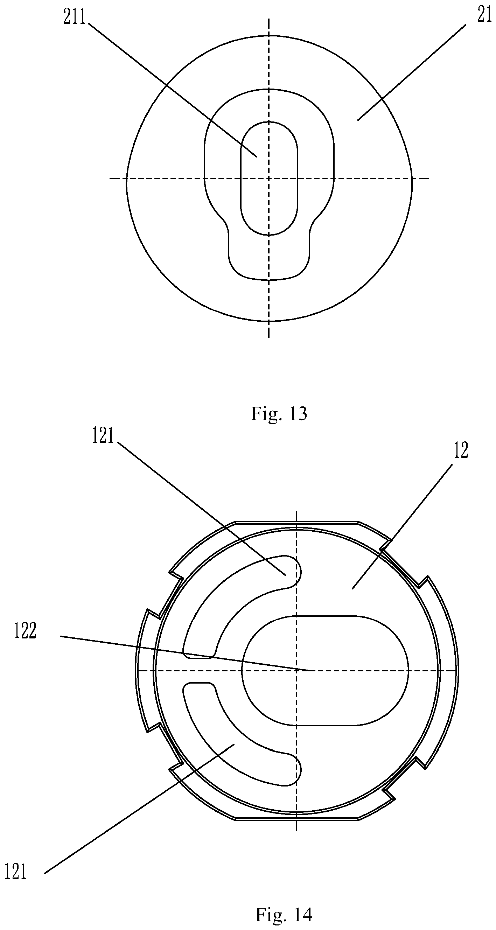

Referring to Figs. 1-18, a multifunctional control valve comprises a valve body 1, a main control valve core 2, a switch mechanism 3 and a switch driving mechanism 4.

The valve body 1 comprises a housing 11, a fixed piece 12, and a base member 13, and the valve body 1 comprises two water inflowing passages 14, a mixed water passage 15 and two water dividing passages 161 and 162. The fixed piece 12 comprises two first through holes 121, the base member 13 comprises the two water inflowing passages 14 and the two water dividing passages 161 and 162, the base member 13 further comprises two second through holes 131, and the two water inflowing passages 14 respectively comprise one of the two first through holes 121 and one of the two second through hole 131 that are in communication. The fixed piece 12 cooperates with the base member 13 and comprises a control groove 17.

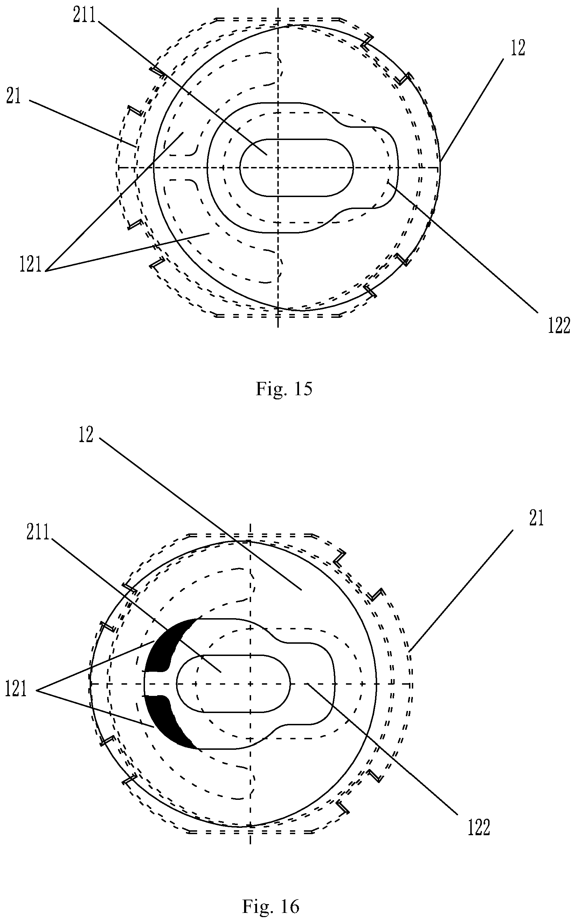

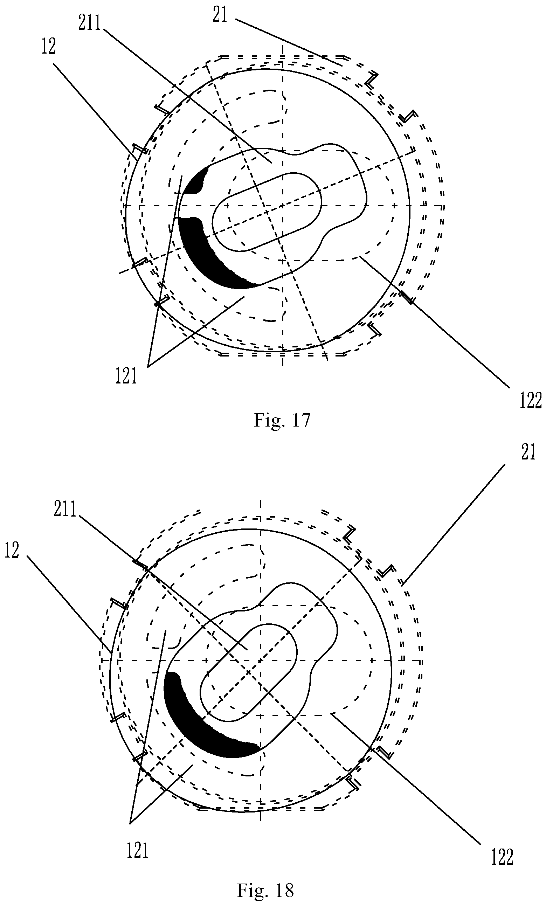

The main control valve core 2 is disposed in the valve body 1 and cooperates with the two water inflowing passages 14 and the mixed water passage 15 to enable the main control valve core 2 to control water temperature, an on-off operation and a flow rate of the mixed water passage 15. The main control valve core 2 comprises a moving piece 21 and a main control driving mechanism 22; An end surface of the moving piece 21 is concave to define a mixed water groove 211, the mixed water passage 15 comprises the mixed water groove 211, and the mixed water groove 211 is in communication with the control groove 17; The end surface of the moving piece 21 hermetically abuts an end surface of the fixed piece 12, a groove opening of the mixed water groove 211 cooperates with the two first through holes 121, and the main control driving mechanism 22 is operatively connected to the moving piece 21 to drive the moving piece 21 to slide and rotate. A detailed structure is as follows: 1. The moving piece 21 horizontally (e.g., in a plane) slides to control the on-off operation and the flow rate of the mixed water passage 15, referring to Figs. 15 and 16, the moving piece 21 horizontally slides forward and rearward to control whether an intersection between a front end of the mixed water groove 211 and the two first through holes 121 occurs or not, when the intersection occurs, water is open, and when the intersection does not occur, the water is closed. Further, an area of the intersection controls the flow rate, when the intersection is larger, the flow rate is greater, and when the intersection is smaller, the flow rate is smaller; 2. The moving piece 21 rotates to control the water temperature of the mixed water passage 15, referring to Figs. 17 and 18, the moving piece 21 horizontally rotates to control a ratio of an intersection between the mixed water groove 211 and the two first through holes 121, when an intersection between the mixed water groove 211 and one of the two first through holes 121 for cold water is more, the water temperature is cooled down, otherwise the water temperature is heated up. The moving piece 21 and the fixed piece 12 are, for example, both ceramic pieces.

The main control driving mechanism 22 comprises a rotating base 221, two swinging rods 222 and a connector base 223; an end surface of the connector base 223 is concave to define an insert groove, and the connector base 223 and the moving piece 21 are connected together to define an entity to move synchronously, for example, to slide and rotate together; the rotating base 221 is rotatably connected to an inner side of the housing 11 of the valve body 1, the two swinging rods 222 are disposed on two sides of the rotating base 221, and pivot shafts pass through middle portions of the two swinging rods and are connected to the rotating base 221, so that the two swinging rods 222 are pivotally connected to the rotating base 221. Outer ends of the two swinging rods 222 extend out of the rotating base 221, and inner ends of the two swinging rods 222 are disposed in the insert groove of the connector base 223. Therefore, the two swinging rods 222 swing to drive the connector base 223 and the moving piece 21 to slide together, the two swinging rods 222 rotate to drive the rotating base 221, the connector base 223 and the moving piece 21 to rotate together, and the swinging rods control the moving piece to slide and rotate. The structure is compact and the operation is convenient.

In this embodiment, the main control driving mechanism 22 further comprises an interlocking base 224 and a handle rod 225, the interlocking base 224 comprises a matching groove, the outer ends of the two swinging rods 222 cooperate with and are disposed in the matching groove of the interlocking base 224, and the handle rod 225 is fixedly connected to the interlocking base 224, the handle rod 225 is operated to move upward and downward to control the moving piece to swing, the handle rod 225 swings leftward and rightward to control the moving piece to rotate, and operational convenience for the user is further improved.

The switch mechanism 3 is disposed in the valve body 1 and cooperates with the mixed water passage 15 and the two water dividing passages 161 and 162 to enable the switch mechanism 3 to switch the two water dividing passages 161 and 162 to be in communication with the mixed water passage 15. The switch driving mechanism 4 comprises a sliding rod 41, the rotating base 221 comprises a sliding groove 226 penetrating up and down, the sliding rod 41 is slidably connected to the sliding groove 226, and the sliding rod 41 is operatively connected to the switch mechanism 3 to drive the switch mechanism 3 to achieve the switching.

The switch mechanism 3 comprises a switch shaft 31, the switch shaft 31 is slidably connected to an inner side of the valve body 1. The switch shaft 31 slides to control the two water dividing passages 161 and 162 to be switched to be in communication with the mixed water passage 15. The switch shaft 31 is at least partially disposed in the control groove 17.

A bottom surface of the switch shaft 31 is concave to define a water groove 311, and the switch shaft 31 comprises two water holes 312 separately disposed along an axis and penetrating an inner side and an outer side of the water groove 311. The two water holes 312 are in communication with the water groove 311 and the control groove 17 and/or in communication the water groove 311 and the mixed water groove 211, so that the mixed water passage is always in communication with the water groove 311; the water groove 311 is in communication with one of the two water dividing passages 161, and the control groove 17 is in communication with another one of the two water dividing passages 162. A first sealing ring 313 and a second sealing ring 314 are fixedly disposed on an outer side of the switch shaft 31. The first sealing ring 313 cooperates with the base member, and the switch shaft 31 slides to enable the first sealing ring 313 to control an on-off operation of the control groove 17 to achieve a switching operation of the two water dividing passages. In a detailed structure, the two water dividing passages 161 and 162 are respectively a first water dividing passage 161 and a second water dividing passage 162; the first water dividing passage 161 is disposed with a sealing piston 163 configured to slide relative to the first water dividing passage and a water-closing spring 164 configured to abut the sealing piston, the first water dividing passage 161 is divided into a front water passage 1611 and a rear water passage 1612 due to the sealing piston 163. The water groove 311 is in communication with the rear water passage 1612; the control groove 17 comprises a control port 171, and the first sealing ring 313 cooperates with the control port 171 to enable the first sealing ring 313 to control the on-off operation of the control groove 17, and the control port 171 is in communication with the second water dividing passage 162 and the front water passage 1611. In a further detailed structure, the base member 13 comprises a bottom base 132, a middle base 133 and a fixed base 134 that are hermetically and fixedly connected together in sequence; the control port 171 is disposed on the fixed base 134, and the middle base 133 comprises a middle through groove and two first side through grooves, the bottom base 132 comprises two second side through grooves and a lower groove extending inward from a top surface; each of the two water dividing passages 161 and 162 comprises one of the two first side through grooves and one of the two second side through grooves that are in communication; the sealing piston 163 is slidably connected to one of the two first side through grooves, the water-closing spring 164 is disposed on the one of the two first side through grooves and abuts the sealing piston 163 and the fixed base 134, a part of the one of the two first side through grooves disposed above the water-closing spring 164 defines the front water passage 1611, and a part of the one of the two first side through grooves disposed below the water-closing spring 164 and the one of the two second side through grooves define the rear water passage 1612; a gap 135 is defined between an upper end surface of the middle through groove and the fixed base, and the gap is in communication with upper ports of the two first side through grooves; the middle through groove is in communication with the lower groove, the switch shaft 31 is hermetically connected to the middle through groove due to the second sealing ring 314, and the control groove 17 is in communication the one of the two first side through groove. In detail, a clearance 136 in communication with a lower port (the rear water passage) of the one of the two first side through grooves is defined between the lower groove and the middle through groove. A middle portion of the fixed piece 12 comprises a third through hole 122, and the control groove 17 comprises the control port, the middle through groove, the lower groove and the third through hole. The aforementioned switching structure is used to achieve the switching due to a cooperation the on-off operation of water passages and water pressure, the structure is compact and labor-saving, and the switching is stable and reliable.

The switch driving mechanism 4 comprises an automatic ballpoint pen mechanism and a button 42, the sliding rod defines a pressing rod of the automatic ballpoint pen mechanism, the switch shaft 31 defines a ballpoint refill of the automatic ballpoint pen mechanism, and an elastic body 43 abuts the switch shaft 31. The elastic body 43 defines a reset spring of the automatic ballpoint pen mechanism; the rotating base 221 defines a ratchet wheel base of the automatic ballpoint pen mechanism, and the button abuts and is connected to the sliding rod. The automatic ballpoint pen mechanism is used to cooperate with the water pressure to achieve the switching, the operation is convenient and labor-saving.

In a state that the water flows out of the first water dividing passage 161, the button is pressed to drive the switch shaft 31 to move downward, the first sealing ring 313 of the switch shaft 31 blocks the control port 171, and the second water dividing passage 162 is closed; at this time, no water flows through the front water passage 1611 that is in front of the sealing piston 163, and an upper side of the sealing piston 163 is not subjected to water pressure, mixed water passes through the mixed water groove 211/a part of control groove 17 disposed above the control port 171-the two water holes 312-the water groove 311-the lower groove-the clearance 136-the lower port of the one of the first side through grooves (the rear water passage 1612), a lower side of the sealing piston is subjected the water pressure to be lifted upward due to overcoming an elastic force of the water-closing spring, a lower sealing surface of the sealing piston is separated from a protruding platform of a passage of the base member, the first water dividing passage 161 is opened, and the water flows out of the first water dividing passage 161. In a state that the water flows out of the second water dividing passage 162, the button is pressed, the switch shaft 31 moves upward due to the reset spring, the first sealing ring 313 of the switch shaft is separated from the control port 171, the control port 171 is opened, the mixed water passes through the mixed water groove 211-the control port 171- the gap 135-the two first side through grooves, one of the two first side through grooves and one of the two second side through grooves of the second water dividing passage are in communication, the water flows out of the second water dividing passage 162, the water flows through an upper port of the first side through groove of the first water dividing passage (the front water passage), the sealing piston moves downward to block the protruding platform of the passage of the base member due to the water pressure and the water-closing spring, and the first water dividing passage 161 is closed.

A shower comprising the multifunctional control valve comprises a faucet body 51, two water inflowing joints 52 and two water outflowing passages 53. The two water inflowing joints are disposed on a left side and a right side of a rear surface of the faucet body and are respectively in communication with the two water inflowing passages. A middle of a front surface of the faucet body comprises a mounting groove 54, and the multifunctional control valve is disposed in the mounting groove. The two water outflowing passages are respectively in communication with the two water dividing passages. A front side of the faucet body 51 is fixedly connected to a fixed sleeve 55 aligned with the mounting groove, the button is slidingly connected to the fixed sleeve, and the handle rod extends out of the fixed sleeve. The layout of the shower is reasonable, the structure is compact, and the operation is convenient.

The invention may be summarized as follows: The present disclosure discloses a multifunctional control valve and a shower. The multifunctional control valve comprises a valve body, a main control valve core, a switch mechanism and a switch driving mechanism. The main control valve core is disposed in the valve body and cooperates with the two water inflowing passages and the mixed water passage to enable the main control valve core to control a water temperature, an on-off operation and a flow rate of the mixed water passage. The switch mechanism is disposed in the valve body and cooperates with the mixed water passage and the two water dividing passages to enable the switch mechanism to switch the two water dividing passages to be in communication with the mixed water passage. The switch driving mechanism comprises a sliding rod, the sliding rod is slidably connected to the main control valve core, and the sliding rod is operatively connected to the switch mechanism to drive the switch mechanism to achieve the switching. It integrates an on-off operation, flow rate adjustment, water temperature adjustment and waterway switching, the structure is compact , the assembly is convenient, and the operation is convenient.

The aforementioned embodiments are merely some embodiments of the present disclosure, and the scope of the disclosure of is not limited thereto. Thus, it is intended that the present disclosure cover any modifications and variations of the presently presented embodiments provided they are made without departing from the appended claims.

## Claims

1. Multifunctional control valve, which comprises:
a valve body (1), wherein the valve body (1) comprises two water inflowing passages (14), a mixed water passage (15) and two water dividing passages (161, 162);
a main control valve core (2), wherein the main control valve core (2) is disposed in the valve body (1) and cooperates with the two water inflowing passages (14) and the mixed water passage (15) to enable the main control valve core (2) to control a water temperature, an on-off operation and a flow rate of the mixed water passage (15);
a switch mechanism (3), wherein the switch mechanism (3) is disposed in the valve body (1) and cooperates with the mixed water passage (15) and the two water dividing passages (161, 162) to enable the switch mechanism (3) to switch the two water dividing passages (161, 162) to be in communication with the mixed water passage (15), the multifunctional control valve being **characterized in that** an end surface of the main control valve core (2) is concave to define a sliding groove (226) and **in that** the multifunctional control valve further comprises
a switch driving mechanism (4), wherein the switch driving mechanism (4) comprises a sliding rod (41), the sliding rod (41) is slidably connected to the sliding groove (226), and the sliding rod (41) is operatively connected to the switch mechanism (3) to drive the switch mechanism (3) to achieve the switching.

2. The multifunctional control valve according to claim 1, **characterized in that**: the valve body (1) comprises a fixed piece (12), the fixed piece (12) comprises two first through holes (121), and the two water inflowing passages (14) respectively comprise one of the two first through holes (121); the main control valve core (2) comprises a moving piece (21) and a main control driving mechanism (22); an end surface of the moving piece (21) is concave to define a mixed water groove (211), and the mixed water passage (15) comprises the mixed water groove (211); the end surface of the moving piece (21) hermetically abuts an end surface of the fixed piece (12), and a groove opening of the mixed water groove (211) cooperates with the two first through holes (121); the main control driving mechanism (22) is operatively connected to the moving piece (21) to drive the moving piece (21) to slide and rotate; the moving piece (21) slides to control the on-off operation and the flow rate of the mixed water passage (15), and the moving piece (21) rotates to control the water temperature of the mixed water passage (15).

3. The multifunctional control valve according to claim 2, **characterized in that**: the main control driving mechanism (22) comprises a rotating base (221) and a swinging rod (222), the rotating base (221) is rotatably connected to an inner side of the valve body (1), and a middle portion of the swinging rod (222) is pivotally connected to the rotating base, an inner end of the swinging rod (222) is operatively connected to the moving piece (21), and the swinging rod (222) swings to drive the moving piece (21) to slide, and the swinging rod (222) rotates to drive the rotating base (221) and the moving piece (21) to rotate; the rotating base (221) comprises the sliding groove (226).

4. The multifunctional control valve according to claim 3, **characterized in that**: the main control driving mechanism (22) further comprises a connector base (223), the connector base (223) and the moving piece (21) are connected together to move synchronously; an end surface of the connector base (223) is concave to define an insert groove, an inner end of the swinging rod (222) is disposed in the insert groove, so that the swinging rod (222) swings to drive the connector base (223) and the moving piece (21) to slide together and the swinging rod (222) rotates to drive the rotating base (221), the connector base (223) and the moving piece (21) to rotate together.

5. The multifunctional control valve according to any one or more of claims 2 to 4, **characterized in that**: the main control driving mechanism (22) further comprises an interlocking base (224) and a handle rod (225), an outer end of the swinging rod (222) extends out of the rotating base (221), the interlocking base (224) comprises a matching groove, the outer end of the swinging rod (222) cooperates with and is disposed in the matching groove, and the handle rod (225) is fixedly connected to the interlocking base (224).

6. The multifunctional control valve according to any one or more of claims 1 to 5, **characterized in that**: the switch mechanism (3) comprises a switch shaft (31), the switch shaft (31) is slidably connected to an inner side of the valve body (1), and the switch shaft (31) slides to control the two water dividing passages (161, 162) to be switched to be in communication with the mixed water passage (15); the switch driving mechanism (4) comprises an automatic ballpoint pen mechanism, the sliding rod (41) defines a pressing rod of the automatic ballpoint pen mechanism, and the switch shaft (31) defines a ballpoint refill of the automatic ballpoint pen mechanism.

7. The multifunctional control valve according to claim 6, **characterized in that**: the valve body (1) comprises a fixed piece (12), the main control valve core (2) comprises a moving piece (21) and a main control driving mechanism (22), an end surface of the moving piece (21) is concave to define a mixed water groove (211), and the mixed water passage (15) comprises the mixed water groove (211); the end surface of the moving piece (21) hermetically abuts an end surface of the fixed piece (12), the main control driving mechanism (22) is operatively connected to the moving piece (21) to drive the moving piece (21) to slide and rotate, the moving piece (21) slides to control the on-off operation and the flow rate of the mixed water passage (15), and the moving piece (21) rotates to control the water temperature of the mixed water passage (15); the valve body (1) comprises a base member (13), the base member (13) comprises two second through holes (131) and the two water dividing passages (161, 162), and the two water inflowing passages (14) respectively comprise one of the two second through holes (131); the base member (13) cooperates with the fixed piece (12) and comprises a control groove (17) in communication with the mixed water groove (211), and the switch shaft (31) is at least partially disposed in the control groove (17).

8. The multifunctional control valve according to claim 7, **characterized in that**: a bottom surface of the switch shaft (31) is concave to define a water groove (311), the switch shaft (31) comprises a water hole (312) penetrating an inner side and an outer side of the water groove (311), and the water hole (312) is in communication with the water groove (311) and the control groove (17) and/or the water groove (311) and the mixed water groove (211); the water groove (311) is in communication with one of the two water dividing passages (161, 162), the control groove (17) is in communication with another one of the two water dividing passages (161, 162), a first sealing ring (313) is fixedly disposed on an outer side of the switch shaft (31), the first sealing ring (313) cooperates with the base member (13), so that the switch shaft (31) slides to control an on-off operation of the control groove (17) to achieve the switching for the two water dividing passages (161, 162) due to the first sealing ring (313).

9. The multifunctional control valve according to claim 8, **characterized in that**: the two water dividing passages (161, 162) comprises a first water dividing passage (161) and a second water dividing passage (162); the first water dividing passage (161) is disposed with a sealing piston (163) configured to slide relative to the first water dividing passage (161) and a water-closing spring (164) configured to abut the sealing piston (163), the first water dividing passage (161) is divided into a front water passage (1611) and a rear water passage (1612) due to the sealing piston (163), and the water groove (311) is in communication with the rear water passage (1612); the control groove (17) comprises a control port (171), the first sealing ring (313) cooperates with the control port (171) to control the on-off operation of the control groove (17) due to the first sealing ring (313), and the control port (171) is in communication with the second water dividing passage (162) and the front water passage (1611).

10. The multifunctional control valve according to claim 9, **characterized in that**: the base member (13) comprises a bottom base (132), a middle base (133) and a fixed base (134) hermetically and fixedly connected together in sequence; the fixed base (134) comprises the control port (171), the middle base (133) comprises a middle through groove and two first side through grooves, the bottom base (132) comprises two second side through grooves and a lower groove extending inward from a top surface; the two water dividing passages (161, 162) respectively comprises one of the two first side through grooves and one of the two second side through grooves that are in communication; the sealing piston (163) is slidably connected to one of the two first side through grooves, the water-closing spring (164) is disposed in the one of the two first side through grooves and abuts the sealing piston (163) and the fixed base (134); a gap (135) is defined between the middle through groove and the fixed base (134), the gap (135) is in communication with upper ends of the two first side through grooves; the middle through groove is in communication with the lower groove, the switch shaft (31) is hermetically connected to the middle through groove due to a second sealing ring (314), and the control groove (17) is in communication with a lower end of the one of the two first side through grooves; the control groove (17) comprises the control port (171), the middle through groove and the lower groove.

11. The multifunctional control valve according to claim 10, **characterized in that**: a clearance (136) in communication with the rear water passage (1612) is defined between the lower groove and the middle through groove.

12. The multifunctional control valve according to any one or more of claims 7 to 11, **characterized in that**: a middle portion of the fixed piece (12) comprises a third through hole (122), and the control groove (17) further comprises the third through hole (122).

13. The multifunctional control valve according to any one or more of claims 6 to 12, **characterized in that**: the switch driving mechanism (4) further comprises a button (42), the button (42) abuts and is connected to the sliding rod (41), and an elastic body (43) abuts the switch shaft (31).

14. A shower, which comprises the multifunctional control valve according to any one or more of claims 1 to 13.

15. The shower according to claim 14, **characterized in that**: the shower further comprises a faucet body (51), two water inflowing joints (52) and two water outflowing passages (53), the two water inflowing joints (52) are disposed on a left side and a right side of a rear surface of the faucet body (51) and are respectively in communication the two water inflowing passages (14), a middle of a front surface of the faucet body (51) comprises a mounting groove (54), the multifunctional control valve is disposed in the mounting groove (54), and the two water outflowing passages (53) are respectively in communication with the two water dividing passages (161, 162).

## Patentansprüche

1. Multifunktionales Steuerventil, welches folgendes aufweist:
einen Ventilkörper (1), wobei der Ventilkörper (1) zwei Wassereinströmdurchgänge (14), einen Mischwasserdurchgang (15) und zwei Wasserteilungsdurchgänge (161, 162) aufweist;
einen Hauptsteuerventilkern (2), wobei der Hauptsteuerventilkern (2) in dem Ventilkörper (1) angeordnet ist und mit den zwei Wassereinströmdurchgängen (14) und dem Mischwasserdurchgang (15) zusammenarbeitet, um dem Hauptsteuerventilkern (2) zu ermöglichen, eine Wassertemperatur, einen Ein-/Aus-Betrieb und eine Strömungsrate des Mischwasserdurchgangs (15) zu steuern;
einen Schaltmechanismus (3), wobei der Schaltmechanismus (3) in dem Ventilkörper (1) angeordnet ist und mit dem Mischwasserdurchgang (15) und den zwei Wasserteilungsdurchgängen (161, 162) zusammenarbeitet, um dem Schaltmechanismus (3) zu ermöglichen, die zwei Wasserteilungsdurchgänge (161, 162) zu schalten, um mit dem Mischwasserdurchgang (15) in Verbindung zu stehen, wobei das multifunktionale Steuerventil **dadurch gekennzeichnet ist, dass** eine Endoberfläche des Hauptsteuerventilkerns (2) konkav ist, um eine Gleitnut (226) zu definieren, und dadurch dass, das multifunktionale Steuerventil ferner folgendes aufweist:
einen Schaltantriebsmechanismus (4), wobei der Schaltantriebsmechanismus (4) eine Gleitstange (41) aufweist, wobei die Gleitstange (41) gleitbar mit der Gleitnut (226) verbunden ist, und die Gleitstange (41) betriebsmäßig mit dem Schaltmechanismus (3) verbunden ist, um den Schaltmechanismus (3) anzutreiben, um das Schalten zu erreichen.

2. Das multifunktionale Steuerventil nach Anspruch 1, **dadurch gekennzeichnet, dass**: der Ventilkörper (1) ein Feststück (12) aufweist, wobei das Feststück (12) zwei erste Durchgangslöcher (121) aufweist, und die zwei Wassereinströmdurchgänge (14) jeweils eines der zwei ersten Durchgangslöcher (121) aufweisen; der Hauptsteuerventilkern (2) ein Bewegstück (21) und einen Hauptsteuerantriebsmechanismus (22) aufweist; eine Endoberfläche des Bewegstücks (21) konkav ist, um eine Mischwassernut (211) zu definieren, und der Mischwasserdurchgang (15) die Mischwassernut (211) aufweist; die Endoberfläche des Bewegstücks (21) hermetisch an einer Endoberfläche des Feststücks (12) anliegt, und eine Nutöffnung der Mischwassernut (211) mit den zwei ersten Durchgangslöchern (121) zusammenarbeitet; der Hauptsteuerantriebsmechanismus (22) betriebsmäßig mit dem Bewegstück (21) verbunden ist, um das Bewegstück (21) zum Gleiten und Drehen anzutreiben; das Bewegstück (21) gleitet, um den Ein-/Aus-Betrieb und die Strömungsrate des Mischwasserdurchgangs (15) zu steuern, und das Bewegstück (21) sich dreht, um die Wassertemperatur des Mischwasserdurchgangs (15) zu steuern.

3. Das multifunktionale Steuerventil nach Anspruch 2, **dadurch gekennzeichnet, dass**: der Hauptsteuerantriebsmechanismus (22) eine Drehbasis (221) und eine Schwingstange (222) aufweist, wobei die Drehbasis (221) drehbar mit einer Innenseite des Ventilkörpers (1) verbunden ist, und ein Mittelteil der Schwingstange (222) schwenkbar mit der Drehbasis verbunden ist, ein inneres Ende der Schwingstange (222) betriebsmäßig mit dem Bewegstück (21) verbunden ist, und die Schwingstange (222) schwingt, um das Bewegstück (21) zum Gleiten anzutreiben, und die Schwingstange (222) sich dreht, um die Drehbasis (221) und das Bewegstück (21) zum Drehen anzutreiben; die Drehbasis (221) die Gleitnut (226) aufweist.

4. Das multifunktionale Steuerventil nach Anspruch 3, **dadurch gekennzeichnet, dass**: der Hauptsteuerantriebsmechanismus (22) ferner eine Verbindungsbasis (223) aufweist, wobei die Verbindungsbasis (223) und das Bewegstück (21) miteinander verbunden sind, um sich synchron zu bewegen; eine Endoberfläche der Verbindungsbasis (223) konkav ist, um eine Einsetznut zu definieren, ein inneres Ende der Schwingstange (222) in der Einsetznut angeordnet ist, so dass die Schwingstange (222) schwingt, um die Verbindungsbasis (223) und das Bewegstück (21) anzutreiben, um miteinander zu gleiten, und die Schwingstange (222) sich dreht, um die Drehbasis (221), die Verbindungsbasis (223) und das Bewegstück (21) anzutreiben, um sich miteinander zu drehen.

5. Das multifunktionale Steuerventil nach einem oder mehreren der Ansprüche 2 bis 4, **dadurch gekennzeichnet, dass**: der Hauptsteuerantriebsmechanismus (22) ferner eine Verriegelungsbasis (224) und eine Griffstange (225) aufweist, wobei ein äußeres Ende der Schwingstange (222) sich aus der Drehbasis heraus erstreckt, die Verriegelungsbasis (224) eine Passnut aufweist, das äußere Ende der Schwingstange (222) mit der Passnut zusammenarbeitet und in dieser angeordnet ist, und die Griffstange (225) fest mit der Verriegelungsbasis (224) verbunden ist.

6. Das multifunktionale Steuerventil nach einem oder mehreren der Ansprüche 1 bis 5, **dadurch gekennzeichnet, dass**: der Schaltmechanismus (3) eine Schaltwelle (31) aufweist, wobei die Schaltwelle (31) gleitbar mit einer Innenseite des Ventilkörpers (1) verbunden ist, und die Schaltwelle (31) gleitet, um die zwei Wasserteilungsdurchgänge (161, 162) zu steuern, um geschaltet zu werden, um mit dem Mischwasserdurchgang (15) in Verbindung zu stehen; der Schaltantriebsmechanismus (4) einen Automatikkugelschreibermechanismus aufweist, die Gleitstange (41) eine Druckstange des Automatikkugelschreibermechanismus definiert, und die Schaltwelle (31) eine Kugelschreibermine des Automatikkugelschreibermechanismus definiert.

7. Das multifunktionale Steuerventil nach Anspruch 6, **dadurch gekennzeichnet, dass**: der Ventilkörper (1) ein Feststück (12) aufweist, der Hauptsteuerventilkern (2) ein Bewegstück (21) und einen Hauptsteuerantriebsmechanismus (22) aufweist, eine Endoberfläche des Bewegstücks (21) konkav ist, um eine Mischwassernut (211) zu definieren, und der Mischwasserdurchgang (15) die Mischwassernut (211) aufweist; die Endoberfläche des Bewegstücks (21) hermetisch an einer Endoberfläche des Feststücks (12) anliegt, der Hauptsteuerantriebsmechanismus (22) betriebsmäßig mit dem Bewegstück (21) verbunden ist, um das Bewegstück (21) zum Gleiten und Drehen anzutreiben, das Bewegstück (21) gleitet, um den Ein-/Aus-Betrieb und die Strömungsrate des Mischwasserdurchgangs (15) zu steuern, und das Bewegstück (21) sich dreht, um die Wassertemperatur des Mischwasserdurchgangs (15) zu steuern; der Ventilkörper (1) ein Basisglied (13) aufweist, wobei das Basisglied (13) zwei zweite Durchgangslöcher (131) und die zwei Wasserteilungsdurchgänge (161, 162) aufweist, und die zwei Wassereinströmdurchgänge (14) jeweils eines der zwei zweiten Durchgangslöcher (131) aufweisen; das Basisglied (13) mit dem Feststück (12) zusammenarbeitet und eine Steuernut (17) aufweist, die mit der Mischwassernut (211) in Verbindung steht, und die Schaltwelle (31) wenigstens teilweise in der Steuernut (17) angeordnet ist.

8. Das multifunktionale Steuerventil nach Anspruch 7, **dadurch gekennzeichnet, dass**: eine Bodenoberfläche der Schaltwelle (31) konkav ist, um eine Wassernut (311) zu definieren, die Schaltwelle (31) ein Wasserloch (312) aufweist, das eine Innenseite und eine Außenseite der Wassernut (311) durchdringt, und das Wasserloch (312) mit der Wassernut (311) und der Steuernut (17) und/oder der Wassernut (311) und der Mischwassernut (211) in Verbindung steht; die Wassernut (311) mit einem der zwei Wasserteilungsdurchgängen (161, 162) in Verbindung steht, die Steuernut (17) mit einem weiteren der zwei Wasserteilungsdurchgänge (161, 162) in Verbindung steht, ein erster Dichtungsring (313) fest auf einer Außenseite der Schaltwelle (31) angeordnet ist, der erste Dichtungsring (313) mit dem Basisglied (13) zusammenarbeitet, so dass die Schaltwelle (31) gleitet, um einen Ein-Aus-Betrieb der Steuernut (17) zu steuern, um das Schalten für die zwei Wasserteilungsdurchgänge (161, 162) aufgrund des ersten Dichtungsrings (313) zu erreichen.

9. Das multifunktionale Steuerventil nach Anspruch 8, **dadurch gekennzeichnet, dass**: die zwei Wasserteilungsdurchgänge (161, 162) einen ersten Wasserteilungsdurchgang (161) und einen zweiten Wasserteilungsdurchgang (162) aufweisen; der erste Wasserteilungsdurchgang (161) mit einem Dichtungskolben (163), der konfiguriert ist, um relativ zu dem ersten Wasserteilungsdurchgang (161) zu gleiten, und einer Wasserschließfeder (164), die konfiguriert ist, um an dem Dichtungskolben (163) anzuliegen, angeordnet ist, der erste Wasserteilungsdurchgang (161) in einen vorderen Wasserdurchgang (1611) und einen hinteren Wasserdurchgang (1612) geteilt ist, und zwar aufgrund des Dichtungskolbens (163), und die Wassernut (311) mit dem hinteren Wasserdurchgang (1612) in Verbindung steht; die Steuernut (17) einen Steueranschluss (171) aufweist, der erste Dichtungsring (313) mit dem Steueranschluss (171) zusammenarbeitet, um den Ein-/Aus-Betrieb der Steuernut (17) aufgrund des ersten Dichtungsrings (313) zu steuern, und der Steueranschluss (171) mit dem zweiten Wasserteilungsdurchgang (162) und dem vorderen Wasserdurchgang (1611) in Verbindung steht.

10. Das multifunktionale Steuerventil nach Anspruch 9, **dadurch gekennzeichnet, dass**: das Basisglied (13) eine Bodenbasis (132), eine Mittelbasis (133) und eine Festbasis (134) aufweist, die hermetisch und fest miteinander der Reihe nach verbunden sind; die Festbasis (134) den Steueranschluss (171) aufweist, die Mittelbasis (133) eine Mitteldurchgangsnut und zwei erste Seitendurchgangsnuten aufweist, die Bodenbasis (132) zwei zweite Seitendurchgangsnuten und eine untere Nut, die sich von einer oberen Oberfläche nach innen erstreckt, aufweist; die zwei Wasserteilungsdurchgänge (161, 162) jeweils eine der zwei ersten Seitendurchgangsnuten und eine der zwei zweiten Seitendurchgangsnuten, die in Verbindung stehen, aufweisen; der Dichtungskolben (163) gleitbar mit einer der zwei ersten Seitendurchgangsnuten verbunden ist, die Wasserschließfeder (164) in der einen der zwei ersten Seitendurchgangsnuten angeordnet ist und an dem Dichtungskolben (163) und der Festbasis (134) anliegt; ein Spalt (135) zwischen der Mitteldurchgangsnut und der Festbasis (134) definiert ist, wobei der Spalt (135) in Verbindung mit oberen Enden der zwei ersten Seitendurchgangsnuten steht; die Mitteldurchgangsnut mit der unteren Nut in Verbindung steht, die Schaltwelle (31) hermetisch mit der Mitteldurchgangsnut aufgrund eines zweiten Dichtungsrings (314) verbunden ist, und die Steuernut (17) mit einem unteren Ende von dem einen der zwei ersten Seitendurchgangsnuten in Verbindung steht; die Steuernut (17) den Steueranschluss (171), die Mitteldurchgangsnut und die untere Nut aufweist.

11. Das multifunktionale Steuerventil nach Anspruch 10, **dadurch gekennzeichnet, dass**: ein Freiraum (136), der mit dem hinteren Wasserdurchgang (1612) in Verbindung steht, zwischen der unteren Nut und der Mitteldurchgangsnut definiert ist.

12. Das multifunktionale Steuerventil nach einem oder mehreren der Ansprüche 7 bis 11, **dadurch gekennzeichnet, dass**: ein Mittelteil des Feststücks (12) ein drittes Durchgangsloch (122) aufweist, und die Steuernut (17) ferner das dritte Durchgangsloch (122) aufweist.

13. Das multifunktionale Steuerventil nach einem oder mehreren der Ansprüche 6 bis 12, **dadurch gekennzeichnet, dass**: der Schaltantriebsmechanismus (4) ferner einen Knopf (42) aufweist, wobei der Knopf (42) an der Gleitstange (41) anliegt und mit dieser verbunden ist, und ein elastischer Körper (43) an der Schaltwelle (31) anliegt.

14. Eine Dusche, welche das multifunktionale Steuerventil nach einem oder mehreren der Ansprüche 1 bis 13 aufweist.

15. Die Dusche nach Anspruch 14, **dadurch gekennzeichnet, dass**: die Dusche ferner einen Armaturkörper (51), zwei Wassereinströmverbindungen (52) und zwei Wasserausströmdurchgänge (53) aufweist, wobei die zwei Wassereinströmverbindungen (52) auf einer linken Seite und einer rechten Seite einer hinteren Oberfläche des Armaturkörpers (51) angeordnet sind und jeweils mit den zwei Wassereinströmdurchgängen (14) in Verbindung stehen, eine Mitte einer vorderen Oberfläche des Armaturkörpers (51) eine Befestigungsnut (54) aufweist, das multifunktionale Steuerventil in der Befestigungsnut (54) angeordnet ist, und die zwei Wasserauslassdurchgänge (53) jeweils mit den zwei Wasserteilungsdurchgängen (161, 162) in Verbindung stehen.

## Revendications

1. Vanne de commande multifonctionnelle, qui comprend :
un corps de vanne (1), dans laquelle le corps de vanne (1) comprend deux passages d'écoulement d'entrée d'eau (14), un passage d'eau mélangée (15) et deux passages de séparation d'eau (161, 162) ;
un noyau de vanne de commande principal (2), dans laquelle le noyau de vanne de commande principal (2) est disposé dans le corps de vanne (1) et coopère avec les deux passages d'écoulement d'entrée d'eau (14) et le passage d'eau mélangée (15) pour permettre au noyau de vanne de commande principal (2) de commander une température d'eau, une opération d'activation-désactivation et un débit du passage d'eau mélangée (15) ;
un mécanisme de commutation (3), dans laquelle le mécanisme de commutation (3) est disposé dans le corps de vanne (1) et coopère avec le passage d'eau mélangée (15) et les deux passages de séparation d'eau (161, 162) pour permettre au mécanisme de commutation (3) de commuter les deux passages de séparation d'eau (161, 162) pour être en communication avec le passage d'eau mélangée (15), la vanne de commande multifonctionnelle étant **caractérisée en ce qu'**une surface d'extrémité du noyau de vanne de commande principal (2) est concave pour définir une rainure de coulissement (226) et **en ce que** la vanne de commande multifonctionnelle comprend en outre
un mécanisme d'entraînement de commutation (4), dans laquelle le mécanisme d'entraînement de commutation (4) comprend une tige coulissante (41), la tige coulissante (41) est reliée en coulissant à la rainure de coulissement (226), et la tige coulissante (41) est reliée fonctionnellement au mécanisme de commutation (3) pour entraîner le mécanisme de commutation (3) pour effectuer la commutation.

2. Vanne de commande multifonctionnelle selon la revendication 1, **caractérisée en ce que** : le corps de vanne (1) comprend une pièce fixe (12), la pièce fixe (12) comprend deux premiers trous traversants (121), et les deux passages d'écoulement d'entrée d'eau (14) comprennent respectivement l'un des deux premiers trous traversants (121) ; le noyau de vanne de commande principal (2) comprend une pièce mobile (21) et un mécanisme d'entraînement de commande principal (22) ; une surface d'extrémité de la pièce mobile (21) est concave pour définir une rainure d'eau mélangée (211), et le passage d'eau mélangée (15) comprend la rainure d'eau mélangée (211) ; la surface d'extrémité de la pièce mobile (21) vient hermétiquement en butée contre une surface d'extrémité de la pièce fixe (12), et une ouverture de rainure de la rainure d'eau mélangée (211) coopère avec les deux premiers trous traversants (121) ; le mécanisme d'entraînement de commande principal (22) est relié fonctionnellement à la pièce mobile (21) pour entraîner la pièce mobile (21) à coulisser et à tourner ; la pièce mobile (21) coulisse pour commander l'opération d'activation-désactivation et le débit du passage d'eau mélangée (15), et la pièce mobile (21) tourne pour commander la température d'eau du passage d'eau mélangée (15).

3. Vanne de commande multifonctionnelle selon la revendication 2, **caractérisée en ce que** : le mécanisme d'entraînement de commande principal (22) comprend une base rotative (221) et une tige oscillante (222), la base rotative (221) est reliée en rotation à un côté intérieur du corps de vanne (1), et une partie de milieu de la tige oscillante (222) est reliée en pivotant à la base rotative, une extrémité intérieure de la tige oscillante (222) est reliée fonctionnellement à la pièce mobile (21), et la tige oscillante (222) oscille pour entraîner la pièce mobile (21) à coulisser, et la tige oscillante (222) tourne pour entraîner la base rotative (221) et la pièce mobile (21) à tourner ; la base rotative (221) comprend la rainure de coulissement (226).

4. Vanne de commande multifonctionnelle selon la revendication 3, **caractérisée en ce que** : le mécanisme d'entraînement de commande principal (22) comprend en outre une base de liaison (223), la base de liaison (223) et la pièce mobile (21) sont reliées l'une à l'autre pour se déplacer de manière synchrone ; une surface d'extrémité de la base de liaison (223) est concave pour définir une rainure d'insertion, une extrémité intérieure de la tige oscillante (222) est disposée dans la rainure d'insertion, de sorte que la tige oscillante (222) oscille pour entraîner la base de liaison (223) et la pièce mobile (21) à coulisser ensemble et la tige oscillante (222) tourne pour entraîner la base rotative (221), la base de liaison (223) et la pièce mobile (21) à tourner ensemble.

5. Vanne de commande multifonctionnelle selon l'une des revendications 2 à 4, **caractérisée en ce que** : le mécanisme d'entraînement de commande principal (22) comprend en outre une base d'emboîtement (224) et une tige de poignée (225), une extrémité extérieure de la tige oscillante (222) s'étend hors de la base rotative (221), la base d'emboîtement (224) comprend une rainure correspondante, l'extrémité extérieure de la tige oscillante (222) coopère avec et est disposée dans la rainure correspondante, et la tige de poignée (225) est reliée fixement à la base d'emboîtement (224).

6. Vanne de commande multifonctionnelle selon l'une ou plusieurs des revendications 1 à 5, **caractérisée**
**en ce que** : le mécanisme de commutation (3) comprend un arbre de commutation (31), l'arbre de commutation (31) est relié en coulissant à un côté intérieur du corps de vanne (1), et l'arbre de commutation (31) coulisse pour commander la commutation des deux passages de séparation d'eau (161, 162) pour être en communication avec le passage d'eau mélangée (15) ; le mécanisme d'entraînement de commutation (4) comprend un mécanisme de stylo à bille automatique, la tige coulissante (41) définit une tige de pression du mécanisme de stylo à bille automatique, et l'arbre de commutation (31) définit une recharge de stylo à bille du mécanisme de stylo à bille automatique.

7. Vanne de commande multifonctionnelle selon la revendication 6, **caractérisée en ce que** : le corps de vanne (1) comprend une pièce fixe (12), le noyau de vanne de commande principal (2) comprend une pièce mobile (21) et un mécanisme d'entraînement de commande principal (22), une surface d'extrémité de la pièce mobile (21) est concave pour définir une rainure d'eau mélangée (211), et le passage d'eau mélangée (15) comprend la rainure d'eau mélangée (211) ; la surface d'extrémité de la pièce mobile (21) vient hermétiquement en butée contre une surface d'extrémité de la pièce fixe (12), le mécanisme d'entraînement de commande principal (22) est relié fonctionnellement à la pièce mobile (21) pour entraîner la pièce mobile (21) à coulisser et à tourner, la pièce mobile (21) coulisse pour commander l'opération d'activation-désactivation et le débit du passage d'eau mélangée (15), et la pièce mobile (21) tourne pour commander la température d'eau du passage d'eau mélangée (15) ; le corps de vanne (1) comprend un élément de base (13), l'élément de base (13) comprend deux deuxièmes trous traversants (131) et les deux passages de séparation d'eau (161, 162), et les deux passages d'écoulement d'entrée d'eau (14) comprennent respectivement l'un des deux deuxièmes trous traversants (131) ; l'élément de base (13) coopère avec la pièce fixe (12) et comprend une rainure de commande (17) en communication avec la rainure d'eau mélangée (211), et l'arbre de commutation (31) est au moins partiellement disposé dans la rainure de commande (17).

8. Vanne de commande multifonctionnelle selon la revendication 7, **caractérisée en ce que** : une surface inférieure de l'arbre de commutation (31) est concave pour définir une rainure d'eau (311), l'arbre de commutation (31) comprend un trou d'eau (312) pénétrant un côté intérieur et un côté extérieur de la rainure d'eau (311), et le trou d'eau (312) est en communication avec la rainure d'eau (311) et la rainure de commande (17) et/ou la rainure d'eau (311) et la rainure d'eau mélangée (211) ; la rainure d'eau (311) est en communication avec l'un des deux passages de séparation d'eau (161, 162), la rainure de commande (17) est en communication avec un autre des deux passages de séparation d'eau (161, 162), un premier anneau d'étanchéité (313) est disposé fixement sur un côté extérieur de l'arbre de commutation (31), le premier anneau d'étanchéité (313) coopère avec l'élément de base (13), de sorte que l'arbre de commutation (31) coulisse pour commander une opération d'activation-désactivation de la rainure de commande (17) pour effectuer la commutation pour les deux passages de séparation d'eau (161, 162) en raison du premier anneau d'étanchéité (313).

9. Vanne de commande multifonctionnelle selon la revendication 8, **caractérisée en ce que** : les deux passages de séparation d'eau (161, 162) comprennent un premier passage de séparation d'eau (161) et un second passage de séparation d'eau (162) ; le premier passage de séparation d'eau (161) est disposé avec un piston d'étanchéité (163) configuré pour coulisser par rapport au premier passage de séparation d'eau (161) et un ressort de fermeture d'eau (164) configuré pour venir en butée contre le piston d'étanchéité (163), le premier passage de séparation d'eau (161) est divisé en un passage d'eau avant (1611) et un passage d'eau arrière (1612) en raison du piston d'étanchéité (163), et la rainure d'eau (311) est en communication avec le passage d'eau arrière (1612) ; la rainure de commande (17) comprend un orifice de commande (171), le premier anneau d'étanchéité (313) coopère avec l'orifice de commande (171) pour commander l'opération d'activation-désactivation de la rainure de commande (17) en raison du premier anneau d'étanchéité (313), et l'orifice de commande (171) est en communication avec le second passage de séparation d'eau (162) et le passage d'eau avant (1611).

10. Vanne de commande multifonctionnelle selon la revendication 9, **caractérisée en ce que** : l'élément de base (13) comprend une base inférieure (132), une base de milieu (133) et une base fixe (134) reliées hermétiquement et fixement les unes aux autres dans l'ordre ; la base fixe (134) comprend l'orifice de commande (171), la base de milieu (133) comprend une rainure traversante de milieu et deux premières rainures traversantes de côté, la base inférieure (132) comprend deux secondes rainures traversantes de côté et une rainure inférieure s'étendant vers l'intérieur à partir d'une surface supérieure ; les deux passages de séparation d'eau (161, 162) comprennent respectivement l'une des deux premières rainures traversantes de côté et l'une des deux secondes rainures traversantes de côté qui sont en communication ; le piston d'étanchéité (163) est relié en coulissant à l'une des deux premières rainures traversantes de côté, le ressort de fermeture d'eau (164) est disposé dans l'une des deux premières rainures traversantes de côté et vient en butée contre le piston d'étanchéité (163) et la base fixe (134) ; un espace (135) est défini entre la rainure traversante de milieu et la base fixe (134), l'espace (135) est en communication avec des extrémités supérieures des deux premières rainures traversantes de côté ; la rainure traversante de milieu est en communication avec la rainure inférieure, l'arbre de commutation (31) est relié hermétiquement à la rainure traversante de milieu en raison d'un second anneau d'étanchéité (314), et la rainure de commande (17) est en communication avec une extrémité inférieure de l'une des deux premières rainures traversantes de côté ; la rainure de commande (17) comprend l'orifice de commande (171), la rainure traversante de milieu et la rainure inférieure.

11. Vanne de commande multifonctionnelle selon la revendication 10, **caractérisée en ce que** : un dégagement (136) en communication avec le passage d'eau arrière (1612) est défini entre la rainure inférieure et la rainure traversante de milieu.

12. Vanne de commande multifonctionnelle selon l'une ou plusieurs des revendications 7 à 11, **caractérisée en ce que** : une partie de milieu de la pièce fixe (12) comprend un troisième trou traversant (122), et la rainure de commande (17) comprend en outre le troisième trou traversant (122).

13. Vanne de commande multifonctionnelle selon l'une ou plusieurs des revendications 6 à 12, **caractérisée en ce que** : le mécanisme d'entraînement de commutation (4) comprend en outre un bouton (42), le bouton (42) vient en butée contre et est relié à la tige coulissante (41), et un corps élastique (43) vient en butée contre l'arbre de commutation (31).

14. Douche, qui comprend la vanne de commande multifonctionnelle selon l'une ou plusieurs des revendications 1 à 13.

15. Douche selon la revendication 14, **caractérisée en ce que** : la douche comprend en outre un corps de robinet (51), deux raccords d'écoulement d'entrée d'eau (52) et deux passages d'écoulement de sortie d'eau (53), les deux raccords d'écoulement d'entrée d'eau (52) sont disposés sur un côté gauche et un côté droit d'une surface arrière du corps de robinet (51) et sont respectivement en communication avec les deux passages d'écoulement d'entrée d'eau (14), un milieu d'une surface avant du corps de robinet (51) comprend une rainure de montage (54), la vanne de commande multifonctionnelle est disposée dans la rainure de montage (54), et les deux passages d'écoulement de sortie d'eau (53) sont respectivement en communication avec les deux passages de séparation d'eau (161, 162).
